# EUROPÄISCHE PATENTSCHRIFT

(11) **EP 2 026 038 B1**
(45) Veröffentlichungstag und Bekanntmachung des Hinweises auf die Patenterteilung: **30.11.2011**
(21) Anmeldenummer: 08011667.6
(22) Anmeldetag: 27.06.2008
(51) Int. Cl.: G01C 21/36

(54) **Verfahren zur Änderung des Maßstabs der Kartendarstellung in einem Navigationsgerät**
Method for changing the scale of a map representation in a navigation device
Procédé pour changer l'échelle de la représentation d'une carte dans un système de navigation

(30) Priorität: 14.08.2007 DE 102007038464
(43) Veröffentlichungstag der Anmeldung: 18.02.2009
(73) Patentinhaber: Navigon AG, 20251 Hamburg (DE)
(72) Erfinder: Joachim, Steffen, 97941 Tauberbischofsheim (DE); Katzer, Jochen, 91605 Bergtshofen (DE)
(74) Vertreter: von den Steinen, Axel

(56) Entgegenhaltungen:
- EP-A1- 0 678 731
- EP-A1- 1 983 302
- EP-A2- 1 463 014
- EP-A2- 1 594 102
- DE-A1- 10 027 516
- DE-A1- 19 815 035
- US-A1- 2004 243 307

## Beschreibung

Die Erfindung betrifft ein Verfahren zum Betrieb einer Einrichtung, insbesondere einer Navigationseinrichtung. Gattungsgemäße Navigationseinrichtungen werden insbesondere, jedoch keineswegs ausschließlich, als mobile oder fest eingebaute Navigationsgeräte in Fahrzeugen verwendet. Der Benutzer hat dabei die Möglichkeit, ein Ziel einzugeben, wobei das Navigationsgerät die jeweilige aktuelle Position des Kraftfahrzeuges insbesondere durch Auswertung von GPS-Signalen bestimmt und dann dem Fahrer Anweisungen zur Ansteuerung des Zielpunktes entlang eines vom Navigationsgerät ermittelten Streckenverlaufes gibt. Die Anzahl der erforderlichen Fahranweisungen ist unmittelbar von dem ermittelten Streckenverlauf abhängig.

Bei einem mittels Landstraßen oder Nebenstraßen definierten Streckenverlauf werden aufgrund der komplexeren Streckenführung mehr und gegebenenfalls auch komplexere Fahranweisungen erforderlich, als bei einem zum größten Teil durch eine Autobahn oder einen geraden Abschnitt gekennzeichneten Streckenverlauf. Auch kann ein Streckenverlauf abwechselnd aus komplexen und weniger komplexen Abschnitten bestehen, beispielsweise wenn das Fahrzeug die Autobahn verlässt, um in eine Großstadt einzufahren. Wird das Straßennetz dichter, so besteht das Problem, dass einige der Fahranweisungen auf die konkrete Situation nicht korrekt zugeschnitten sind und somit beim Fahrzeugführer Verwirrung stiften, weil er die Fahranweisungen des Navigationsgerätes dem aktuell vor ihm liegenden Streckenverlauf nicht zuordnen kann.

Um diese Problematik zu lösen, sind diverse Lösungsansätze bekannt. Beispielsweise wird der Darstellungsmaßstab am Display des Navigationsgerätes nach Maßgabe fester Kriterien durch manuellen Eingriff des Fahrers am Navigationsgerät derart verändert, dass die bevorstehenden Streckenabschnitte vergrößert werden. Der für den Fahrer relevante Kantenabschnitt muss in einem solchen Fall beispielsweise mittels manueller graphischer Selektion ausgewählt und anschließend mittels einer Zoomfunktion bezüglich der Detailtreue manuell verändert werden. Dies lenkt den Fahrer vom Verkehr ab.

Außerdem ist ein Zoomen auf herannahende Abbiegemanöver bekannt. In der Patentschrift US 6,529,822 B1 ist dieses Prinzip offenbart. In der genannten Patentschrift wird die Komplexität von Streckenabschnitten mittels der Anfangspunkte und Endpunkte gerader Streckenabschnitte und zusätzlich mittels so genannter "shape points", welche innerhalb und entlang von nicht geradlinigen Streckenverläufen angeordnet sind, ermittelt. Abhängig von der mittels dieser Punkte definierten Routenkomplexität werden am Display des Navigationsgerätes Steckenabschnitte mit verändertem Maßstab dargestellt. Bei komplexen Streckenabschnitten wird abhängig davon, inwieweit der Streckenabschnitt einen vordefinierbaren Rahmen beziehungsweise das zur Verfügung stehende Display füllt, der Maßstab bis zu einem Grenzwert stetig verändert. Die Rückschaltung in den so genannten Übersichtsmodus erfolgt erst dann, wenn der komplexe Streckenabschnitt vom Fahrzeug passiert wurde und wieder ein weniger komplexer Streckenabschnitt bevorstehen sollte.

Der Nachteil dieser Lösung besteht darin, dass der Fahrer während der Durchfahrt des komplexen Streckenabschnittes die Orientierung bezüglich lich des weiteren Streckenverlaufes verlieren kann, weil ihm die Übersicht fehlt. Eine aktuell vorhandene Beschilderung oder sonstige Hinweise am Straßenrand können nicht effektiv genutzt werden, um kurzfristige Richtungsänderungen selbständig vorzunehmen oder vorhandene Ausweichrouten frühzeitig wahrzunehmen. Gerade bei komplexen Streckenabschnitten ist höchste Konzentration vom Fahrer gefordert, so dass er während der Navigation durch diese Streckenabschnitte keine komplizierten Eingaben am Narrigationsgerät vornehmen sollte, denn auch dies lenkt den Fahrer vom Verkehr ab.

Die EP 1 983 302 A1 schlägt weiter ein Verfahren zur dynamischen Feststellung des Zoom-Levels einer kartografischen Anwendung vor, die auf einer mobilen Vorrichtung ausgeführt werden kann, wobei der Zoom-Level in Abhängigkeit von zumindest einem vordefinierten Parameter festgestellt wird. Dabei können sich sowohl statische Informationen, wie beispielsweise Stadtgrenzen oder Sonderziele, als auch dynamische Informationen, wie beispielsweise Geschwindigkeit, in dem zumindest einem vordefinierten Parameter widerspiegeln. Bezüglich der statischen Informationen beschreibt die D1 die Klassifizierung von Orten, wobei die Anpassung des Zoom-Levels in Abhängigkeit von der Klasse des Orts erfolgt, an dem sich die mobile Vorrichtung befindet. Auch eine Straßendichte kann Einfluss auf die vordefinierten Parameter haben, wobei Informationen zur Kreuzungsdichte einer Straße, Krümmung einer Straße, Gebäudedichte an einer Straße und andere Informationen Einfluss auf die Straßendichte haben.

Die US 2004/0243307 A1 beschreibt eine mobile GPS-Navigationsvorrichtung, welche, zum automatischen Zoom, beim Annähern eines Fahrzeugs an einen Entscheidungspunkt eingerichtet ist. Außerdem beschreibt die Druckschrift ein automatisches Zoomen in Abhängigkeit von der Geschwindigkeit eines Fahrzeugs.

Die EP 0 678 731 A1 handelt von einem Fahrzeugnavigationssystem, welches eine Anzeigeeinrichtung und eine zentrale Recheneinrichtung

(CPU) umfasst, wobei die zentrale Recheneinrichtung zur Erzeugung verschiedener vogelperspektivischer Straßenkartendarstellungen eingerichtet ist. Die vogelperspektivischen Straßenkartendarstellungen unterscheiden sich dabei sowohl im Winkel der perspektivischen Ansicht als auch in der räumlichen Auflösung. Der Blickpunkt und die räumliche Auflösung der vogelperspektivischen Darstellungen können gemäß der D3 sowohl von der Fahrzeuggeschwindigkeit als auch von anderen Reisebedingungen, wie beispielsweise der Entfernung zu einer Kreuzung, abhängen.

Die DE 198 15 035 A1 betrifft ein Verfahren und eine Vorrichtung zur Darstellung von Informationen für ein Navigationsgerät, wobei mittels einer Auswerteeinheit Entscheidungs- und Orientierungspunkte innerhalb einer Route bestimmbar sind, und der Maßstab einer darzustellenden Karte adaptiv in Abhängigkeit von der Entfernung zum Entscheidungs- und/oder Orientierungspunkt darstellbar ist.

Die EP 1 463 014 A2 beschreibt ein Navigationsgerät zur Zielführung eines Kraftfahrzeugs, welches Mittel zur automatischen Einstellung eines Darstellungsmaßstabs und eines Dimensionsgrads der Darstellung aufweist. Dabei ist vorgesehen, dass das Einstellungsmittel den Darstellungsmaßstab und den Dimensionsgrad der Darstellung auf Grundlage der momentanen Fahrzeuggeschwindigkeit und von gespeicherten Umgebungsdaten einstellt. Die gespeicherten Umgebungsdaten enthalten dabei Informationen darüber, ob eine momentane Position sich in einem städtischen oder ländlichen Umfeld befindet.

Die DE 100 27 516 A1 betrifft ein Verfahren zur Zoomeinstellung eines Kartendarstellungssystems eines Fahrzeugs, wobei die Zoomeinstellung in Abhängigkeit eines variablen Zoomfaktors erfolgt. Der Zoomfaktor wird dabei anhand von Betriebsparametern, wie beispielsweise der Fahrzeuggeschwindigkeit, und/oder anhand von im Kartendarstellungssystem gespeicherten Streckendaten berechnet.

Die EP 1 594 102 A2 offenbart einen Fahrzeugroutenführungsapparat zum Suchen einer Route für den Fall, dass das Fahrzeug eine Route verlassen hat. Durch Eingabemittel kann der Benutzer des Fahrzeugroutenführungsapparats den Maßstab einer dargestellten Route bzw. eines Teils der dargestellten Route auf einer Anzeigeeinrichtung verändern.

Ausgehend von diesem Stand der Technik besteht die Aufgabe der vorliegenden Erfindung darin, ein neues Verfahren zum Betrieb einer Navigationseinrichtung vorzuschlagen, bei dem der Fahrer ohne aufwändige Interaktionen mit der Navigationseinrichtung jederzeit die Gelegenheit hat, neben einer detaillierten Ansicht der aktuellen Streckenlage einen Überblick bezüglich des weiteren Streckenverlaufes zu erhalten.

Diese Aufgabe wird mittels des Verfahrens nach der Lehre des unabhängigen Anspruches gelöst.

Vorteilhafte Ausführungsformen der Erfindung sind Gegenstand der abhängigen Ansprüche.

Gemäß dem gattungsgemäßen Verfahren wird vom Navigationsgerät fortlaufend die Fahrzeugposition unter Berücksichtigung der empfangenen Positionssignale ermittelt und daraus vom aktuellen Standpunkt bis zu einem vom Benutzer definierbaren Zielpunkt eine Route berechnet. Die ermittelte Route wird durch das Anzeigemittel dargestellt. Das Anzeigemittel kann derart vom Benutzer eingestellt werden, dass während des Abfahrens der Route eine Landkarte beziehungsweise Straßenkarte dargestellt wird, auf welcher die Route selbst oder Routenabschnitte, insbesondere jedoch diejenigen Routenabschnitte, auf denen sich der Benutzer aktuell befindet, angezeigt werden. Die aktuelle Position und Fahrtrichtung wird hierbei besonders kenntlich gemacht, beispielsweise mittels eines Pfeilsymbols.

Erfindungsgemäß wird zur korrekten Ansteuerung des Anzeigemittels von der Einrichtung fortlaufend die vom Benutzer gewünschte Anzeigebetriebsart ermittelt, wobei diese jederzeit vom Benutzer änderbar ist. Das vorhandene Betriebswahlmittel ist derart realisiert, dass der Benutzer mit einfachen Mitteln eine Auswahl treffen kann, so dass er vom Straßenverkehr nicht abgelenkt wird.

Die erste Betriebsart stellt den Routenübersichtsmodus dar und liefert möglichst übersichtliche und detailgetreue Informationen zum weiteren Streckenverlauf, so dass der Fahrer den Verlauf der Strecke abschätzen und mögliche Ausweichrouten beurteilen kann. Im Routenübersichtsmodus erfolgt eine selbsttätige Maßstabsänderung mittels der erfindungsgemäßen Einrichtung nach Maßgabe der Positionsänderungsfrequenz beziehungsweise der hieraus ableitbaren Geschwindigkeit. Es können sowohl zweidimensionale als auch dreidimensionale Ansichten am Anzeigemittel gewählt werden. Die erste Betriebsart ist auch anwendbar, solange keine Routenführung aktiv ist.

Die zweite Betriebsart stellt den Routenführungsanzeigemodus dar und liefert nur Detailinformationen zu mindestens einem aktuell bevorstehenden Streckenabschnitt, so dass der Benutzer unmittelbar bevorstehende Fahranweisungen den aktuell vorherrschenden Umgebungsverhältnissen eindeutig zuordnen kann. Der für diese Betriebsart gewählte Maßstab beziehungsweise Zoomfaktor für die Streckendarstellung wird zur Laufzeit fortlaufend und selbsttätig sowie abhängig von der aktuellen Position und der Streckenkomplexität von der erfindungsgemäßen Einrichtung angepasst. Zur Beurteilung der Streckenkomplexität werden der Strecke zugeordnete Streckenattribute ausgewertet. Anschließend wird ein positionsabhängiger Kartenausschnitt, welcher mittels seines Mittelpunktes und seines Maßstabes gekennzeichnet ist, mittels des Anzeigensteuermittels am Anzeigemittel eingeblendet.

Dabei muss der Streckenabschnitt, welcher von besonderem Interesse für den Benutzer ist, nicht manuell während der Fahrt selektiert und definiert werden. Bei der erfindungsgemäßen Lösung fordert der Benutzer lediglich eine detaillierte Kartendarstellung von der Einrichtung manuell an, während die Art und Weise der Darstellung vollständig automatisiert erfolgt.

Gegenüber der Lösung des Zoomens auf herannahende Abbiegernanöver bietet die erfindungsgemäße Lösung den Vorteil, dass der Benutzer interaktiv und selbst entscheiden kann, wann welcher Darstellungsmodus für seine konkrete Situation am besten geeignet ist. Der Benutzer hat die Möglichkeit, aufgrund der manuell steuerbaren Umschaltmöglichkeit zwischen dem Routenführungsanzeigemodus und dem Routenübersichtsmodus zusätzlich aktuelle Hinweisschilder am Straßenrand in seine Überlegungen bezüglich des weiteren Reiseverlaufes mit einzubinden. Beispielsweise könnte er vor Auffahrt auf eine Autobahn nachtanken und Verpflegung einkaufen. Er kann zu jeder Zeit sowohl einen Detailüberblick als auch einen Grrobüberblick bezüglich der abzufahrenden Strecke am Anzeigemittel vom Anzeigensteuermittel einblenden lassen.

Die Erfindung gewährleistet eine sichere Fahrt und optimalen Informationsaustausch zwischen Navigationsgerät und Fahrer. Die erfindungsgemäße Zoomfunktion liefert eine schnelle Übersicht bezüglich der aktuell abzufahrenden Route und bezüglich Ausweichrouten auch beispielsweise im Falle von TMC-Staumeldungen.

Im Rahmen der ersten Betriebsart ist es vorteilhaft, wenn das Anzeigemittel derart angesteuert wird, dass der Maßstab bei Zunahme der Positionsänderungsfrequenz vergrößert und bei Abnahme der Positionsänderungsfrequenz verkleinert wird. Als Positionsändorungsfrequenz des Navigationssystems kann insbesondere die Geschwindigkeit des Fahrzeuges ausgewertet werden. Bei sich erhöhender Geschwindigkeit des Fahrzeuges werden dann automatisch weniger Details dargestellt, da bei erhöhter Geschwindigkeit die Wahrscheinlichkeit eines geplanten Abbiege- oder Wendemanövers geringer ist als bei niedriger Geschwindigkeit. Diese Funktion ist beispielsweise bei einer Autobahnfahrt sinnvoll, wo in der Regel auch nur die nächste Ausfahrt relevant ist und auf Umgebungsdetails bei der Darstellung weitestgehend verzichtet werden kann. Die Positionsänderungsfrequenz kann dabei beispielsweise aus der Änderung der Positionssignale, z.B. GPS-Signale, abgeleitet werden. Alternativ dazu ist auch die Auswertung anderer Sensoren, beispielsweise des elektronischen Tachometers eines Fahrzeuges, denkbar.

Ist die Vergrößerung bzw. Verkleinerung des Darstellungsmaßstabes linear abhängig von der Positionsänderungsfrequenz, hat dies eine sich ständig ändernde Darstellung zur Folge, soweit die Positionsänderungsfrequenz nicht konstant ist. Es ist deshalb bevorzugt, den Maßstab der Darstellung bei Zunahme bzw. Abnahme der Positionsänderungsfrequenz jeweils stufenweise zu ändern, so dass stufenweise zwischen zumindest zwei Maßstabsstufen umgeschaltet wird. Der Darstellungsmaßstab auf den einzelnen Maßstabsstufen ist jeweils konstant. Jeder Maßstabsstufe ist ein Wertebereich der Positionsänderungsfrequenz zugeordnet. Abhängig von der jeweils detektierten Positionsänderungsfrequenz wird automatisch die zugeordnete Maßstabsstufe eingestellt. Die bedeutet mit anderen Worten, dass die Maßstabsänderung sich nicht stetig an der Positionsänderungsfrequenz, beispielsweise der Geschwindigkeit, orientiert, sondern eine Zuordnung von Maßstäben zu Geschwindigkeitsklassen vorgenommen wird und anhand der aktuellen Geschwindigkeit die zugehörige Geschwindigkeitsklasse und mithin der zugehörige Maßstab ermittelt wird.

Um ein zu häufiges Umschalten zwischen den Maßstabsstufen zu verhindern, ist es vorteilhaft, wenn sich die den verschiedenen Maßstabsstufen zugeordneten Wertebereiche der Positionsänderungsfrequenz zumindest geringfügig überlappen. Die Umschaltung auf eine andere Maßstabsstufe erfolgt dann jeweils erst, wenn der Überlappungsbereich der aktuellen Maßstabsstufe verlassen wird.

Durch die Definition eines zulässigen maximalen und/oder minimalen Maßstabes wird verhindert, dass der von der Einrichtung automatisch gewählte Maßstab einen bezüglich der Darstellung sinnvollen Wert unterschreitet oder überschreitet. Ist dieser vordefinierte Maßstab erreicht, so wird auch bei sich noch weiter ändernder Geschwindigkeit keine weitere Maßstabsänderung mehr vorgenommen.

Auch wäre es denkbar, dass das Anzeigemittel derart angesteuert wird, dass eine Maßstabsänderung nur bezüglich eines vom Benutzer vordefinierbaren Bildausschnittes erfolgt. Dieser Bildausschnitt könnte beispielsweise mittels eines vorgebbaren Umkreises mit der aktuellen Fahrzeugposition als Mittelpunkt oder abhängig von der vom Benutzer noch wahrnehmbaren Sichtweite definiert sein.

Bevorzugt werden die von der Einrichtung ermittelten und vom bevorstehenden Streckenabschnitt abhängigen Fahranweisungen als Streckenattribute mit Referenzen auf die zugehörige Strecke oder die Straßenkarte abgespeichert. Jeder vom Navigationsgerät ermittelte Streckenverlauf (Gesamtstrecke zwischen Startpunkt und Zielpunkt) kann in Teilstrecken oder Streckenabschnitte untergliedert werden, und jeder Streckenabschnitt umfasst wiederum eine bestimmte Anzahl von Fahranweisungen bezüglich des Streckenabschnittes.

Im Routenführungsanzeigemodus kann damit eine selbsttätige Maßstabsänderung nach Maßgabe der ermittelten Position und den von dieser Position abhängigen und noch folgenden Fahranweisungen erfolgen. Dies ist derart im Navigationssystem implementiert, dass aus der Anzahl der ermittelten Fahranweisungen auf die Komplexität eines Streckenabschnittes geschlossen wird. Bei dem bevorstehenden Streckenabschnitt unter Beachtung der ihm zugeordneten Fahranweisungen handelt es sich im Prinzip um eine Zusammenfassung aller von einem Fahrer auszuführenden Aktionen. Je mehr Aktionen der Fahrer innerhalb eines bestimmten Zeitraumes auszuführen hat, desto komplexer ist die abzufahrende Strecke und desto sinnvoller ist es, eine detaillierte Darstellung des unmittelbaren Umfeldes im Routenführungsanzeigemodus am Anzeigemittel vorzunehmen. Nimmt die Anzahl der Fahranweisungen ab, so kann wieder eine Umschaltung in den Routenübersichtsmodus erfolgen.

Besonders bevorzugt werden in der Einrichtung ortschaftsspezifische Daten zusätzlich als Streckenattribut abgespeichert. Beispielsweise könnte dann auf die Vergrößerung eines Ortes verzichtet werden, wenn weniger als eine vorgebbare Mindestanzahl von Fahranweisungen mit diesem Ort verbunden ist (beispielsweise 3 Fahranweisungen). Auch könnte die Größe der Ortschaft ein Kriterium für eine Maßstabsänderung sein. Ebenfalls sinnvoll ist es, wenn von der Einrichtung straßenspezifische Daten als Streckenattribut zusätzlich abgespeichert werden. Die Definition eines Streckenabschnittes erfolgt dann beispielsweise auch unter Berücksichtigung des nächsten Autobahnkreuzes oder Autobahndreiecks, der nächst möglichen Autobahnabfahrt oder Autobahnzufahrt.

Besonders bevorzugt ermittelt die Einrichtung selbsttätig zumindest einen alternativen Streckenverlauf zwischen einem vom Benutzer gewählten Startpunkt und Zielpunkt. Bei der Wahl des Maßstabes kann diese alternative Strecke dann berücksichtigt werden, so dass der Benutzer sowohl die aktuell abzufahrende Route als auch die mögliche alternative Route im Blickfeld hat und rechtzeitig auf diese Route ausweichen könnte.

Vorteilhafterweise umfasst die Einrichtung ein Mittel zur Erfassung und Abspeicherung von Ansteuervorschriften für die Ansteuerung des Anzeigemittels, wobei die Maßstabsänderung unter Berücksichtigung dieser Ansteuervorschriften erfolgt. Es wäre gegebenenfalls auch denkbar und sinnvoll, das Mittel so zu realisieren, dass mehrere Ansteuervorschriften kombinierbar sind. Mittels dieser Vorschriften können mehrere Zoomstufen realisiert werden.

Zur Definition der Vorschriften könnte beispielsweise der aktuelle und/oder nachfolgende Routenabschnitt zugrunde gelegt werden, insbesondere bevorstehende Autobahnkreuze, Autobahnanschlussstellen und alle weiteren für die abzufahrende Strecke wesentlichen Informationen. Neben den reinen Fahranweisungen oder in Form von weiteren Streckenattributen erfolgt somit die Ansteuerung des Anzeigemittels zusätzlich noch nach Maßgabe eines benutzerdefinierbaren Regelwerkes.

Besonders vorteilhaft ist es, wenn das Anzeigemittel nach Maßgabe der Ansteuervorschrift derart angesteuert wird, dass es entweder der Darstellung des Streckenverlaufes oder der Darstellung einer digitalisierten und in der Einrichtung abgespeicherten Straßenkarte Vorrang gewährt. Es ist somit definierbar, inwieweit der Darstellung der aktuellen Route oder den Streckendetails Vorrang eingeräumt wird. Verlässt beispielsweise die Route die Autobahn vor dem nächsten Autobahnkreuz, wird dieses Autobahnkreuz nicht mehr im Routenübersichtsmodus dargestellt, wenn die Route stärker gewichtet ist. Ausnahme könnte sein, dass das nächste Autobahnkreuz sich noch innerhalb eines darzustellenden Maximalradius befindet, der unter allen Umständen noch angezeigt wird. Hat die abgespeicherte Straßenkarte bei der Darstellung Vorrang, so tritt die darzustellende Route in den Hintergrund, und es wird stets ein allgemeiner Überblick des Straßennetzes dargestellt. Um bei dem zuvor gewählten Beispiel zu bleiben, würde hier beispielsweise stets das nächste Autobahnkreuz, gegebenenfalls innerhalb eines definierbaren Maximalradius, angezeigt, auch wenn die Route nicht über dieses Autobahnkreuz führt. Mittels der Vorrangschaltung kann die Darstellung im Routenübersichtsmodus somit vereinfacht werden, da eine Überladung der Anzeige mit unnötigen Details vermieden wird.

Es ist sinnvoll, stets zusätzlich den aktuell gewählten Maßstab im Anzeigemittel mit einzublenden, damit der Benutzer die Entfernungen besser abschätzen kann.

Vorteilhafterweise umfasst die Einrichtung ein Mittel zur Erfassung und Abspeicherung von benutzerdefinierbaren Streckenabschnitten, wobei diese Streckenabschnitte bei der Ermittlung des Streckenverlaufes berücksichtigt werden. Der Benutzer kann dadurch einerseits Anfahrziele als Teil der Route erzwingen, aber auch die Anfahrt bestimmter Ortschaften oder Strecken vermeiden, indem die Einrichtung bei der Ermittlung des Streckenverlaufes diese Abschnitte berücksichtigt oder ausspart.

Es ist auch sinnvoll, dass mittels der Streckenattribute ein Schwellwert für den erforderlichen Mindestmaßstab bezüglich eines Streckendetails definierbar ist, wobei die Ansteuerung des Anzeigemittels unter Berücksichtigung dieses Mindestmaßstabes erfolgt. Dies vermeidet eine übermäßige Verkleinerung von Details, wodurch eine nicht mehr sinnvolle Darstellung dieser Details bewirkt würde.

Vorteilhafterweise wird die manuelle Betriebsartenwahl von der Einrichtung mittels des Eingabemittels taktil, akustisch oder optisch erfasst. Das Anzeigemittel könnte beispielsweise eine berührungssensitive Anzeigefläche als Eingabemittel umfassen, wobei deren Berührung von der Einrichtung als Aufforderung zur Betriebsartenumschaltung interpretiert wird. Der Fahrer kann sich dann weiter auf den Straßenverkehr konzentrieren und ist nicht durch komplizierte Bedienvorgänge abgelenkt. Dies reduziert das Unfallrisiko.

Ganz besonders bevorzugt wird bei der Umschaltung zwischen den Betriebsarten eine zwischenzeitlich erfolgte Positionsänderung bei der Ansteuerung des Anzeigemittels berücksichtigt, so dass der Fahrer stets und in Echtzeit die aktuelle Streckensituation am Anzeigemittel vorfindet.

Sinnvollerweise erfolgt die Umschaltung zwischen der zweiten und ersten Betriebsart zeitgesteuert. Der Fahrer muss dann beispielsweise bei der Umschaltung von der zweiten auf die erste Betriebsart keine Bedienaktion mehr vornehmen und kann sich voll auf den Straßenverkehr konzentrieren. Er aktiviert dann lediglich die Umschaltung von der ersten auf die zweite Betriebsart manuell.

Eine Ausführungsform der Erfindung ist in den Zeichnungen schematisch dargestellt und wird nachfolgend beispielhaft erläutert, wobei nicht alle dargestellten Aspekte für die Durchführung des erfindungsgemäßen Verfahrens wesentlich sind.

Es zeigen:
- Fig. 1: das Anzeigemittel des erfindungsgemäße Navigationssystems in der Betriebsart "Routenführungsanzeigemodus";
- Fig. 2: das Anzeigemittel des erfindungsgemäßen Navigationssystems in der Betriebsart "Routenübersichtsmodus";
- Fig. 3: das Anzeigemittel des erfindungsgemäßen Navigationssystems wie in Fig. 2, jedoch mit ausgeblendeten Straßendetails.

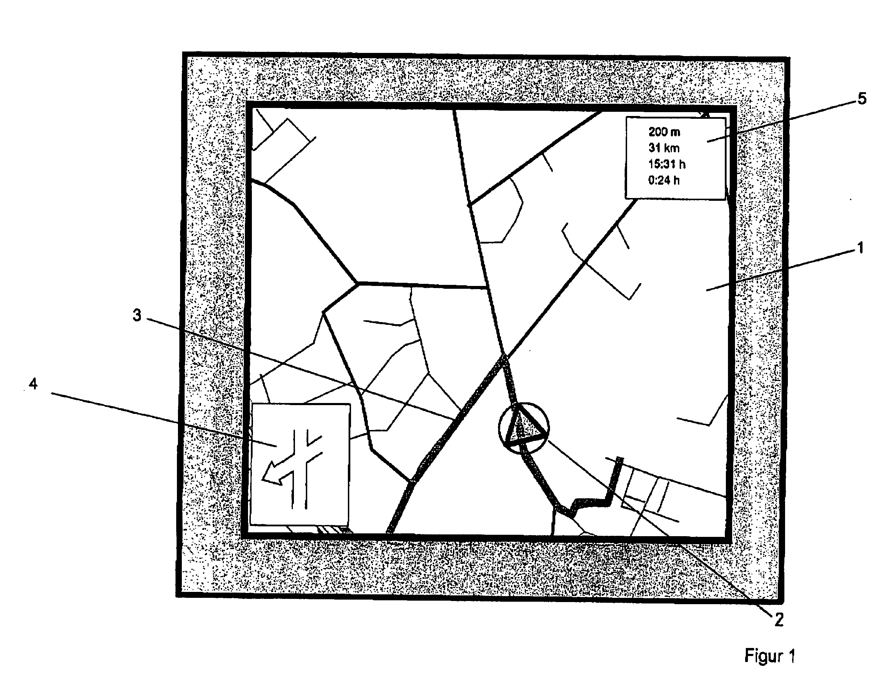

Das in Fig. 1 dargestellte erfindungsgemäße Navigationssystem umfasst zumindest eine Prozessoreinrichtung zur Durchführung von Berechnungen in Verbindung mit der Ermittlung des Streckenverlaufes 3, ein Positionssignalempfangsmittel zum Empfang von Positionssignalen, insbesondere GPS-Signalen, eine Wegenetzdatenbank, die auch dem Streckenverlauf 3 zugeordnete Streckenattribute enthält, eine Positionsermittlungseinheit zur Bestimmung der aktuellen Fahrzeugposition aus den empfangenen GPS-Positionssignalen, ein Anzeigemittel zur Darstellung des ermittelten Streckenverlaufes 3, welcher in eine digitale Straßenkarte 1 eingeblendet wird, ein Anzeigensteuermittel zur Steuerung des Anzeigemittels, insbesondere zur maßstäblichen Änderung der Darstellung der Straßenkarte 1 mit Streckenverlauf 3, ein Eingabemittel zur Auswahl von zumindest zwei Betriebsarten des Anzeigemittels, wobei durch das Anzeigensteuermittel die Einstellung des Anzeigemittels unter Berücksichtigung des Eingabemittels veränderbar ist. Das Anzeigemittel dient auch zur Anzeige der von der Positionsermittlungseinheit ermittelten aktuellen Fahrzeugposition 2, wobei die aktuelle Fahrzeugposition 2 ebenfalls in die Straßenkarte 1 und den Streckenverlauf 3 vom Anzeigemittel eingeblendet wird. Der vom Navigationsgerät errechnete Streckenverlauf 3 kann je nach Betriebsart vollständig oder teilweise in die Straßenkarte eingeblendet werden.

In dem in Fig. 1 gezeigten konkreten Beispiel ist die Landkarte 1 in Nord-Richtung ausgerichtet, und die Fahrzeugposition beziehungsweise die aktuelle Fahrzeugrichtung wird mittels eines Pfeilsymbols 2 angezeigt. Alternativ wäre es möglich, das Anzeigemittel derart anzusteuern, dass die Landkarte stets aus der Sicht des Fahrers dargestellt wird, also nicht in Nord-Richtung fixiert ist. Der Fahrer kann sich dadurch gegebenenfalls leichter orientieren und die gewünschte Darstellungsform nach eigenem Ermessen am Navigationsgerät auswählen. Zusätzlich ist die Art der Ansicht am Navigationssystem konfigurierbar. Es ist eine zweidimensionale oder eine dreidimensionale Ansicht wählbar, wobei bei der dreidimensionalen Ansicht auf die Nord-Ausrichtung verzichtet wird.

Das Anzeigensteuermittel blendet auf Anforderung Zusatzinformationen 5 zur Route 3 in das Anzeigemittel ein. Insbesondere handelt es sich hierbei um die vom Navigationssystem ermittelte Distanz bis zur nächsten Fahranweisung und/oder die vom Navigationssystem ermittelte Reststrecke bis zum Zielpunkt entlang der errechneten Route 3 und/oder um die Darstellung der Uhrzeit und/oder um die Darstellung der Fahrzeit und/oder um die Darstellung der Restfahrzeit und/oder um die Darstellung der geschätzten Ankunftszeit. In die Straßenkarte 1 wurde vom Anzeigemittel in diesem Beispiel zusätzlich eine Detailansicht 4 bezüglich des nächsten Fahrmanövers eingeblendet, welches durchfahren werden muss, wenn der Fahrer dem berechneten Streckenverlauf 3 folgen will. Hier handelt es sich um ein scharfes Abbiegemanöver nach links betrachtet aus der Sicht des Fahrers. Diese zusätzliche schematische Ansicht hilft dem Fahrer, den Überblick zu behalten und sich gleichzeitig mental auf das nächste Manöver vorzubereiten.

Optional können zusätzliche Informationen in das Anzeigemittel eingeblendet werden, beispielsweise die GPS-Signalstärke oder die zulässige Geschwindigkeit oder der aktuelle Straßenname. Selbstverständlich können im Prinzip alle vom Navigationssystem verarbeiteten Informationen in das Anzeigemittel eingeblendet werden.

Standardmäßig bei Inbetriebnahme des Navigationssystems befindet sich das Anzeigemittel in einer der beiden Betriebsarten, vorzugsweise in der ersten Betriebsart. In der ersten Betriebsart wird die maßstäbliche Darstellung der Straßenkarte 1 mit Streckenverlauf 3 mittels der Fahrzeuggeschwindigkeit bestimmt. Die Geschwindigkeit des Fahrzeuges entspricht in dieser Ausführungsform der Positionsänderungsfrequenz des Navigationssystems. In Fig. 1 ist ein relativ großer Kartenausschnitt passend zur aktuellen und relativ geringen Fahrzeuggeschwindigkeit (50 km/h) gewählt worden. Reduziert sich die Geschwindigkeit, so wird stufenweise der Kartenausschnitt weiter vergrößert. Dies könnte beispielsweise der Fall sein bei der bevorstehenden Linkskurve, die das Fahrzeug 2 ausführen muss, wenn es dem Straßenverlauf 3 folgen will. Der Extremfall wäre der Stillstand des Fahrzeuges, zum Beispiel beim Warten an einer Ampel. In einem solchen Falle passt das Anzeigensteuermittel stufenweise den Maßstab bis zu einem vordefinierbaren Schwellwert derart an, dass der Fahrer eine optimale Übersicht bezüglich der aktuellen Straßensituation und der unmittelbar bevorstehenden Fahrmanöver erhält.

Sinngemäß gilt der umgekehrte Fall bei der Beschleunigung des Fahrzeuges. Je schneller das Fahrzeug fährt, desto größer wird der Kartenausschnitt am Anzeigemittel eingestellt. Inwieweit Änderungen der Geschwindigkeit zu einer Maßstabsänderung führen, kann durch Angabe von Minimal- oder Maximalmaßstäben, welche bestimmten Geschwindigkeitswerten zugeordnet sind, vordefiniert werden. Zusätzlich können bei der Maßstabsänderung Straßentypen (Landstraße, Feldweg, Schnellstraße oder Autobahn) und örtliche Gegebenheiten (innerhalb eines Orts oder außerhalb eines Ortes) berücksichtigt werden.

Bei der in Fig. 1 dargestellten Situation (Routenführungsanzeigemodus) ist für den Fahrer nicht erkennbar, wie die zu fahrende Strecke 3 nach dem Abbiegemanöver nach links an der bevorstehenden Weggabelung weiter verläuft. Vorhandene Straßenbeschilderungen, beispielsweise bezüglich Autobahnauffahrten, Raststätten, Tankstellen usw., können vom Fahrer nicht in seinen weiteren Reiseverlauf eingeplant werden. Grund hierfür ist, dass der Fahrer erst dann Details bezüglich des weiteren Reiseverlaufs erfährt, wenn es gegebenenfalls schon zu spät ist. Vor der Auffahrt auf eine Autobahn könnte es beispielsweise sinnvoll sein, einen Tankstopp einzulegen, um aufzutanken. Erfährt der Fahrer erst kurz vor der Auffahrt, dass er die nächsten 300 Kilometer via Autobahn zurücklegen wird, so muss er gegebenenfalls umkehren oder kann erst zu einem späteren Zeitpunkt und gegebenenfalls teurer an einer Autobahnraststätte auftanken.

Hätte der Fahrer schon längere Zeit vor der Autobahnauffahrt einen Überblick bezüglich des bevorstehenden Streckenabschnittes vom Navigationssystem erhalten, so könnte er alle nötigen Vorbereitungen proaktiv und frühzeitig planen, ohne dass sein weiterer Reiseverlauf verzögert oder gefährdet wird. Um dies zu verhindern, kann der Fahrer mittels des Eingabemittels am Navigationsgerät (Taste, Touch-Screendisplay, oder Spracheingabe), die Anzeigebetriebsart am Anzeigemittel von einem gegebenenfalls aktuell gewählten "Routenführungsanzeigemodus" umschalten auf den "Routenübersichtsmodus".

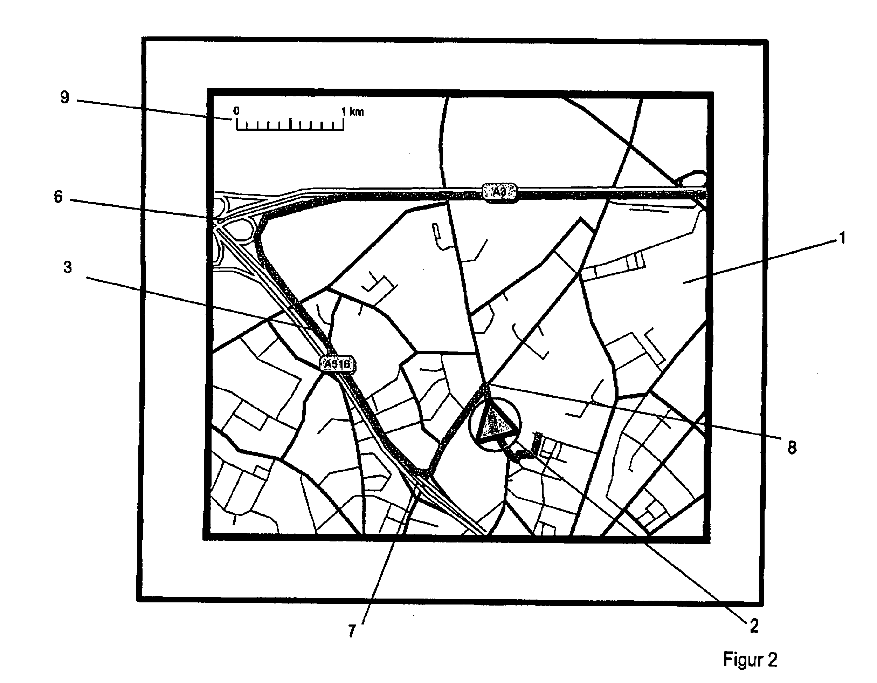

Diese Betriebsart ist beispielhaft in Fig. 2 dargestellt. Wie man beim Vergleich der Fig. 1 mit der Fig. 2 leicht sieht, stellt das Anzeigemittel im Rotenübersichtsmodus gegenüber dem Routenführungsanzeigemodus (Fig. 1) dieselbe Straßenkarte mit denselben Informationen dar, jedoch ist diese Darstellung im Vergleich zum Routenführungsanzeigemodus verkleinert, so dass für weitere angrenzende Umgebungsdetails auf dem Display des Anzeigemittels Raum geschaffen wird. Um dies zu erreichen, wird im Rotenübersichtsmodus der Darstellungsmaßstab für die Straßenkarte mit dem eingeblendeten Streckenverlauf derart geändert, dass für die Beurteilung des weiteren Streckenverlaufes 3 erforderliche Details für den Fahrer frühzeitig sichtbar werden, so dass er vorhandene Verkehrsschilder sinnvoll nutzen kann.

Die Navigationseinrichtung wählt in diesem Beispiel den Maßstab derart aus, dass zu den nächsten drei aufeinander folgenden Fahranweisungen gehörende Streckenabschnitte im Anzeigemittel dargestellt werden können. Somit wird die nächste für die Strecke 3 relevante Autobahnanschlussstelle 7 und das nächste für die Strecke 3 relevante Autobahnkreuz 6 sichtbar. Die Darstellung könnte auch zusätzlich unter Berücksichtigung benutzerdefinierter Ablaufvorschriften beeinflusst werden. Damit der Fahrer die Entfernungen besser abschätzen kann, blendet das Anzeigemittel zusätzlich den Maßstab 9 ein.

Im Beispiel der Fig. 2 wird zusätzlich die aktuelle Fahrzeugposition mittels eines Pfeils 2 und der Streckenverlauf 3 mittels einer besonderen Kennzeichnung (Fettdruck) vom Anzeigemittel dargestellt. Selbstverständlich könnten zusätzlich die aus Fig. 1 bekannten Zusatzinformationen 4,5 zur Route 3 und zum nächsten Manöver eingeblendet werden. Auch die Einblendung weiterer Informationen wie weiter oben beschrieben ist denkbar. Alternativ wäre es möglich, die schematische Ansicht 4 aus Fig. 1 bezüglich des nächsten Manövers nur dann einzublenden, wenn sich das Fahrzeug diesem nächsten Manöver unmittelbar nähert. Im konkreten Beispiel erkennt der Fahrer, dass nach dem unmittelbar bevorstehenden Manöver (scharf links abbiegen) eine Auffahrt auf die Autobahn A 516 folgt und danach auf die Autobahn A3 aufgefahren werden muss. Mittels der Beschilderung auf dem Weg zur Autobahnauffahrt ist es für den Fahrer nun einfacher, die in der Realität anzutreffende Situation der Anzeige des Navigationsgerätes zuzuordnen. So könnte beispielsweise an der nächsten Kreuzung ein Hinweisschild in Richtung der Autobahn A516 oder der Autobahn A3 aufgestellt sein, so dass der Fahrer nun die grobe Richtung der Strecke kennt und das Navigationssystem wieder auf den Routenführungsanzeigemodus umschalten könnte oder gar bis zur Auffahrt auf die Autobahn gänzlich ohne Hilfe des Navigationssystems auskommen könnte. Bevor der Fahrer auf die Autobahn fährt, könnte er noch dringende Dinge erledigen, wozu er später keine Gelegenheit mehr hat.

Die Autobahnfahrt selbst kann dann im Gegensatz zu Fahrten auf Landstraßen oder in Städten mittels einer weniger detaillierten Karte vom Anzeigemittel dargestellt werden. Dies wäre zum Beispiel dadurch steuerbar, dass Autobahnabschnitte mit geeigneten Streckenattributen versehen werden, welche das Navigationssystem auswertet, wobei es unter Berücksichtigung dieser Streckenattribute den Maßstab der vom Anzeigemittel dargestellten Karte konfiguriert. Der Fahrer hat damit eine bessere Übersicht bezüglich möglicher Ausweichrouten bei Unfällen, Verkehrsstaus oder Baustellen. Er kann beispielsweise alternative Autobahnen oder Straßen auswählen, welche im Gegensatz zum Führungsmodus im Übersichtsmodus leichter erkennbar sind.

Die Umschaltung zwischen den Betriebsarten erfolgt entweder durch Abfrage des Eingabemittels und/oder zeitgesteuert, so dass beispielsweise auch ohne manuelle Eingaben des Fahrers nach einer vorgebbaren Anzeigezeit das Anzeigemittel automatisch wieder in die aktuell nicht aktivierte Betriebsart umgeschaltet werden kann. Die Zeitüberwachung könnte mittels eines Timers realisiert werden, welcher ein Steuersignal für das Anzeigemittel erzeugt, so dass dieses eine Umschaltung der Betriebsart bewirkt.

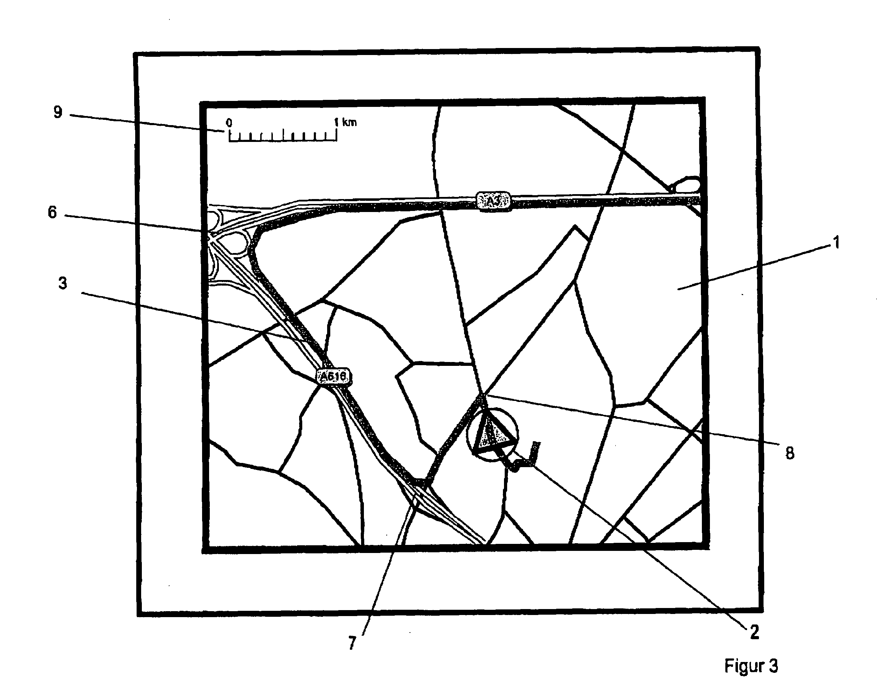

Fig. 3 zeigt die Anzeige eines erfindungsgemäßen Navigationssystems, wobei mittels eines Schwellwertes ein Mindestmaßstab für die Darstellung von Streckenabschnitten mittels der Streckenattribute definiert wurde. Das Anzeigensteuermittel bewirkt eine Darstellung von Kartendetails nur dann, wenn der aktuelle Darstellungsmaßstab 9 eine bezüglich der erforderlichen Auflösung für das darzustellende Objekt sinnvolle Darstellung gewährleistet. Vergleicht man die Kartenausschnitte 1 aus Fig. 2 und 3 so fällt auf, dass in Fig. 3 kleinere, für den Streckenverlauf offensichtlich unwesentliche Straßen vom Anzeigemittel ausgeblendet wurden. Der Grund hierfür ist, dass diesen Straßen ein Mindestmaßstab zugeordnet wurde, wobei der aktuell gewählte Darstellungsmaßstab unter Berücksichtigung dieses Mindestmaßstabes keine für den Fahrer nützliche Darstellung dieser Straßen mehr zulässt. Auch könnten mit dieser Methode Waldstücke, Parks, Gewässer, Orte von besonderem Interesse (POIs) etc. gezielt ein- oder ausgeblendet werden, indem für diese Kartenelemente ein Grenzmaßstab bezüglich der Darstellung definiert wird.

## Patentansprüche

1. Verfahren zum Betrieb einer Einrichtung zur Ermittlung eines Streckenverlaufes (3) für ein Fortbewegungsmittel, insbesondere eine Navigationseinrichtung für ein Kraftfahrzeug, die Einrichtung umfassend eine Prozessoreinrichtung, ein Positionssignalempfangsmittel, insbesondere für GPS-Signale, eine Wegenetzdatenbank, die auch streckenspezifische Informationen in Form von Streckenattributen umfasst, eine Positionsermittlungseinheit zur Bestimmung einer Position aus den empfangenen Positionssignalen, ein Anzeigemittel zur Darstellung des ermittelten Streckenverlaufes (3), ein Anzeigensteuermittel zur Ansteuerung des Anzeigemittels,
mit folgenden Verfahrensschritten:
a) Positionsermittlung unter Berücksichtigung empfangener Positionssignale und selbsttätige Aktivierung einer ermittelten ersten oder zweiten Betriebsart, für das Anzeigemittel
b) Selbsttätige Änderung der maßstäblichen Darstellung (9) des Streckenverlaufes (3) am Anzeigemittel bei Ermittlung der ersten Betriebsart mittels des Anzeigensteuermittels, unter Berücksichtigung der Positionsänderungsfrequenz;
und/oder
c) Selbsttätige Änderung der maßstäblichen Darstellung (9) des Streckenverlaufes (3) am Anzeigemittel bei Ermittlung der zweiten Betriebsart mittels des Anzeigensteuermittels ausgehend von der ermittelten Position und unter Berücksichtigung der Streckenattribute,
**dadurch gekennzeichnet, dass**
die Betriebsartenermittlung durch Abfrage eines Eingabemittels der Einrichtung zur manuellen Auswahl der ersten und der zweiten Betriebsart für das Anzeigemittel erfolgt, wobei zur Ansteuerung des Anzeigemittels von der Einrichtung fortlaufend die vom Benutzer gewünschte Anzeigebetriebsart ermittelt wird, wobei diese jederzeit vom Benutzer änderbar ist.

2. Verfahren nach Anspruch 1,
**dadurch gekennzeichnet,**
**dass** im Rahmen der ersten Betriebsart das Anzeigemittel derart angesteuert wird, dass der Maßstab bei Zunahme der Positionsänderungsfrequenz verringert und bei Abnahme der Positionsänderungsfrequenz vergrößert wird.

3. Verfahren nach Anspruch 2,
**dadurch gekennzeichnet,**
**dass** der Maßstab bei Änderung der Positionsänderungsfrequenz stufenweise zwischen zumindest zwei Maßstabsstufen verändert wird, wobei jeder Maßstabsstufe ein Wertebereich der Positionsänderungsfrequenz zugeordnet ist.

4. Verfahren nach Anspruch 3,
**dadurch gekennzeichnet,**
**dass** sich die den verschiedenen Maßstabsstufen zugeordneten Wertebereiche der Positionsänderungsfrequenz jeweils zumindest geringfügig überlappen.

5. Verfahren nach einem der Ansprüche 1 bis 4,
**dadurch gekennzeichnet,**
**dass** im Rahmen der ersten Betriebsart ein zulässiger maximaler und/oder minimaler Maßstab vordefinierbar ist und bei der Ansteuerung des Anzeigemittels berücksichtigt wird.

6. Verfahren nach einem der Ansprüche 1 bis 5,
**dadurch gekennzeichnet,**
**dass** das Anzeigemittel derart angesteuert wird, dass eine Maßstabsänderung nur bezüglich eines vordefinierbaren Bildausschnittes erfolgt.

7. Verfahren nach einem der Ansprüche 1 bis 6,
**dadurch gekennzeichnet,**
**dass** von der Einrichtung Fahranweisungen ermittelt und als Streckenattribut abgespeichert werden.

8. Verfahren nach einem der Ansprüche 1 bis 7,
**dadurch gekennzeichnet,**
**dass** von der Einrichtung ortschaftsspezifische Daten aus der Wegenetzdatenbank als Streckenattribut abgespeichert werden.

9. Verfahren nach einem der Ansprüche 1 bis 8,
**dadurch gekennzeichet**,
dass von der Einrichtung straßenspezifische Daten aus der Wegenetzdatenbank als Streckenattribut abgespeichert werden.

10. Verfahren nach einem der Ansprüche 1 bis 9,
**dadurch gekennzeichnet,**
**dass** die Einrichtung selbsttätig zumindest einen alternativen Streckenverlauf (3) zwischen dem Startpunkt und dem Zielpunkt ermittelt.

11. Verfahren nach Anspruch 10,
**dadurch gekennzeichnet,**
**dass** im Rahmen der zweiten Betriebsart das Anzeigemittel derart angesteuert wird, dass der Maßstab unter Berücksichtigung des alternativen Streckenverlaufes (3) gewählt wird.

12. Verfahren nach einem der Ansprüche 1 bis 11,
**dadurch gekennzeichnet,**
**dass** im Rahmen der zweiten Betriebsart die Ansteuerung des Anzeigemittels unter Berücksichtigung der als Streckenattribut abgelegten Fahranweisungen für einen bevorstehenden Streckenabschnitt erfolgt.

13. Verfahren nach einem der Ansprüche 1 bis 12,
**dadurch gekennzeichnet,**
**dass** die Einrichtung ein Mittel zur Erfassung und Abspeicherung einer Ansteuervorschrift für das Anzeigensteuermittel umfasst, wobei die Maßstabsänderung unter Berücksichtigung der Ansteuervorschrift erfolgt.

14. Verfahren nach Anspruch 13,
**dadurch gekennzeichnet,**
**dass** das Anzeigensteuermittel nach Maßgabe der Ansteuervorsehrift derart angesteuert wird, dass es entweder der Darstellung des Streckenverlaufes (3) oder der Darstellung einer digitalisierten und in der Einrichtung abgespeicherten Straßenkarte (1) Vorrang gewährt.

15. Verfahren nach einem der Ansprüche 1 bis 14,
**dadurch gekennzeichnet,**
**dass** die Einrichtung ein Mittel zur Erfassung und Abspeicherung von benutzerdefinierbaren Streckenabschnitten (3) umfasst, wobei diese Streckenabschnitte (3) bei der Ermittlung des Streckenverlaufes (3) berücksichtigt werden.

16. Verfahren nach einem der Ansprüche 1 bis 15,
**dadurch gekennzeichnet,**
**dass** mittels der Streckenattribute ein Schwellwert für den erforderlichen Mindestmaßstab bezüglich der Darstellung von Streckenabschnitten definierbar ist, wobei die Ansteuerung des Anzeigemittels unter Berücksichtigung des Mindestmaßstabes erfolgt.

17. Verfahren nach einem der Ansprüche 1 bis 16,
**dadurch gekennzeichnet,**
**dass** die manuelle Betriebsartenwahl von der Einrichtung mittels des Eingabemittels taktil, akustisch oder optisch erfasst wird.

18. Verfahren nach Anspruch 17,
**dadurch gekennzeichnet,**
**dass** das Anzeigemittel eine berührungssensitive Anzeigefläche als Eingabemittel umfasst und eine Berührung als Eingabe verarbeitet wird.

19. Verfahren nach einem der Ansprüche 1 bis 18,
**dadurch gekennzeichnet,**
**dass** bei Umschaltung zwischen den Betriebsarten eine erfolgte Positionsänderung bei der Ansteuerung des Anzeigemittels berücksichtigt wird.

20. Verfahren nach einem der Ansprüche 1 bis 19,
**dadurch gekennzeichnet,**
**dass** die Umschaltung zwischen der zweiten und ersten Betriebsart zeitgesteuert erfolgt.

## Claims

1. A method for operating a device for determining a route (3) for means of locomotion, particularly a navigation device for a motor vehicle, wherein said device comprises a processor, position signal receiving means, particularly for GPS signals, a road network database that also contains route-specific information in the form of route attributes, a position determining unit for determining a position from the received position signals, display means for displaying the determined route (3), display control means for controlling the display means,
wherein said method comprises the following steps:
a) determining the position with consideration of received position signals as well as independently activating a determined first or second operating mode for the display means;
b) independently changing the scale for the display (9) of the route (3) on the display means with the aid of the display control means, namely with consideration of the frequency of changes in position, if the first operating mode is determined;
and/or
c) independently changing the scale for the display (9) of the route (3) on the display means by means of the display control means based on the determined position and with consideration of the route attributes, if the second operating mode is determined, **characterized in that**
the operating mode is determined by querying an input means of the device for manually selecting between the first and second operating modes of the display means, wherein in order to control the display means, the device continuously determines the type of display mode desired by the user, wherein the user is able to change this display mode at any time.

2. The method according to Claim 1,
**characterized in that**
the display means are controlled during the course of the first operating mode in such a way that the display is scaled down when the frequency of changes in position increases and scaled up when the frequency of changes in position decreases.

3. The method according to Claim 2,
**characterized in that**
the scale is changed step-by-step between at least two scale stages if a change occurs in the frequency of changes in position, wherein a range of values of the frequency of changes in position is assigned to each scale stage.

4. The method according to Claim 3,
**characterized in that**
the ranges of values of the frequency of changes in position, which are assigned to the different scale stages, respectively overlap one another at least slightly.

5. The method according to one of Claims 1 to 4, **characterized in that**
a permissible maximum and/or minimum scale can be predefined during the course of the first operating mode and is taken into consideration in the control of the display means.

6. The method according to one of Claims 1 to 5,
**characterized in that**
the display means are controlled in such a way that a scale change is only realized with respect to an area of the displayed map section that can be predefined.

7. The method according to one of Claims 1 to 6,
**characterized in that**
the device determines navigating instructions and stores them in the form of a route attribute.

8. The method according to one of Claims 1 to 7,
**characterized in that**
the device stores locality-specific data of the road network database in the form of a route attribute.

9. The method according to one of Claims 1 to 8,
**characterized in that**
the device stores road-specific data of the road network database in the form of a route attribute.

10. The method according to one of Claims 1 to 9,
**characterized in that**
the device independently determines at least one alternative route (3) between the starting point and the destination.

11. The method according to Claim 10,
**characterized in that**
the display means are controlled during the course of the second operating mode in such a way that the scale is selected with consideration of the alternative route (3).

12. The method according to one of Claims 1 to 11,
**characterized in that**
the control of the display means is realized during the course of the second operating mode with consideration of the navigating instructions for a route section lying ahead that are stored in the form of a route attribute.

13. The method according to one of Claims 1 to 12,
**characterized in that**
the device comprises means for registering and storing a control rule for the display control means, wherein the scale change takes place with consideration of this control rule.

14. The method according to Claim 13,
**characterized in that**
the display control means are controlled in accordance with the control rule in such a way that either the display of the route (3) or the display of a digitized road map (1) stored in the device is assigned priority.

15. The method according to one of Claims 1 to 14,
**characterized in that**
the device comprises means for registering and storing user-defined route sections (3), wherein these route sections (3) are taken into consideration in the determination of the route (3).

16. The method according to one of Claims 1 to 15,
**characterized in that**
a threshold value for the required minimum scale for the display of route sections can be defined by means of the route attributes, wherein the display means are controlled with consideration of the minimum scale.

17. The method according to one of Claims 1 to 16,
**characterized in that**
the device detects the manual selection of the operating mode in a tactile, acoustical or optical fashion with the aid of the input means.

18. The method according to Claim 17,
**characterized in that**
the display means comprise input means in the form of a touch-sensitive display area and touching this display area is interpreted as an input.

19. The method according to one of Claims 1 to 18,
**characterized in that**
a change in position that took place during the change-over between the operating modes is taken into consideration in the control of the display means.

20. The method according to one of Claims 1 to 19,
**characterized in that**
the change-over between the second and the first operating modes takes place in a timed fashion.

## Revendications

1. Procédé d'opération d'un dispositif permettant de déterminer un itinéraire (3) pour un moyen de locomotion, en particulier un dispositif de navigation pour un véhicule à moteur, dans lequel le dispositif comprend un dispositif processeur, un moyen de réception de signaux de position, en particulier pour signaux GPS, une base de données de réseaux routiers contenant également des informations spécifiques à l'itinéraire sous forme d'attributs d'itinéraire, une unité de détermination d'une position pour déterminer une position à partir des signaux de position reçus, un moyen d'affichage pour représenter l'itinéraire (3) déterminé, un moyen de commande d'affichage pour commander le moyen d'affichage, le procédé englobant les étapes suivantes:
a) détermination de la position en considération des signaux de position reçus et activation automatique d'un premier ou d'un second mode d'opération déterminé pour le moyen d'affichage,
b) modification automatique de l'échelle de la représentation (9) de l'itinéraire (3) sur le moyen d'affichage à l'aide du moyen de commande d'affichage en considération de la fréquence des changements de position, si le premier mode d'opération est déterminé;
et/ou
c) modification automatique de l'échelle de la représentation (9) de l'itinéraire (3) sur le dispositif d'affichage à l'aide du moyen de commande d'affichage à partir de la position déterminée et en considération des attributs d'itinéraire, si le second mode d'opération est déterminé,
**caractérisé en ce que**
la détermination du mode d'opération est réalisée en interrogeant un moyen d'entrée du dispositif pour sélectionner manuellement le premier et le second mode d'opération pour le moyen d'affichage, dans lequel, afin de commander le moyen d'affichage, le dispositif détermine en continu le mode d'affichage souhaité par l'utilisateur, l'utilisateur pouvant changer le mode d'affichage à tout moment.

2. Procédé selon la revendication 1,
**caractérisé en ce que**
le moyen d'affichage est commandé au cours du premier mode d'opération de telle manière que l'échelle de la représentation est réduite lorsque la fréquence des changements de position augmente, et est élargie lorsque la fréquence des changements de position diminue.

3. Procédé selon la revendication 2,
**caractérisé en ce que**
l'échelle est modifiée graduellement entre au moins deux niveaux d'échelle lorsque la fréquence des changements de position est modifiée, une gamme de valeurs de la fréquence des changements de position étant attribuée à chaque niveau d'échelle.

4. Procédé selon la revendication 3,
**caractérisé en ce que**
les gammes de valeurs de la fréquence des changements de position, qui sont attribuées aux différents niveaux d'échelle, se chevauchent au moins partiellement.

5. Procédé selon l'une quelconque des revendications 1 à 4,
**caractérisé en ce qu'**
une échelle maximale et/ou une échelle minimale permissible peut être prédéfinie au cours du premier mode d'opération et est prise en considération lorsque le moyen d'affichage est commandé.

6. Procédé selon l'une quelconque des revendications 1 à 5,
**caractérisé en ce que**
le moyen d'affichage est commandé de telle manière qu'une modification de l'échelle est réalisée seulement par rapport à une section de l'image qui peut être prédéfinie.

7. Procédé selon l'une quelconque des revendications 1 à 6,
**caractérisé en ce que**
le dispositif détermine des instructions de navigation et les mémorise sous forme d'un attribut d'itinéraire.

8. Procédé selon l'une quelconque des revendications 1 à 7,
**caractérisé en ce que**
le dispositif mémorise des données étant spécifiques à la localité à partir de la base de données de réseaux routiers sous forme d'un attribut d'itinéraire.

9. Dispositif selon l'une quelconque des revendications 1 à 8,
**caractérisé en ce que**
le dispositif mémorise des données étant spécifiques à la route à partir de la base de données de réseaux routiers sous forme d'un attribut d'itinéraire.

10. Dispositif selon l'une quelconque des revendications 1 à 9,
**caractérisé en ce que**
le dispositif détermine automatiquement au moins un itinéraire alternatif (3) entre le point de départ et la destination.

11. Procédé selon la revendication 10,
**caractérisé en ce que**
le moyen d'affichage est commandé au cours du second mode d'opération de telle manière que l'échelle est sélectionnée en considération de l'itinéraire alternatif (3).

12. Procédé selon l'une quelconque des revendications 1 à 11,
**caractérisé en ce que**
la commande du moyen d'affichage est réalisée au cours du second mode d'opération en considération des instructions de navigation pour une section d'itinéraire imminente et qui sont mémorisées sous forme d'un attribut d'itinéraire.

13. Procédé selon l'une quelconque des revendications 1 à 12,
**caractérisé en ce que**
le dispositif comprend un moyen pour l'enregistrement et la mémorisation d'une instruction de commande pour le moyen de commande d'affichage, la modification de l'échelle étant réalisée en considération de ladite instruction de commande.

14. Procédé selon la revendication 13,
**caractérisé en ce que**
le moyen de commande d'affichage est commandé conformément à l'instruction de commande de telle manière que la priorité est accordée soit à la représentation de l'itinéraire (3) soit à la représentation d'une carte routière (1) digitalisée et mémorisée dans le dispositif.

15. Procédé selon l'une quelconque des revendications 1 à 14,
**caractérisé en ce que**
le dispositif comprend des moyens pour l'enregistrement et la mémorisation des sections d'itinéraire (3) qui peuvent être définies par l'utilisateur, lesdites sections d'itinéraire (3) étant prises en considération lors de la détermination de l'itinéraire (3).

16. Procédé selon l'une quelconque des revendications 1 à 15,
**caractérisé en ce qu'**
une valeur seuil pour l'échelle minimale requise pour la représentation des sections d'itinéraire peut être définie à l'aide des attributs d'itinéraire, dans lequel le moyen d'affichage est commandé en considération de l'échelle minimale.

17. Procédé selon l'une quelconque des revendications 1 à 16,
**caractérisé en ce que**
le dispositif détecte la sélection manuelle du mode d'opération dans une manière tactile, acoustique ou bien optique à l'aide du moyen d'entrée.

18. Procédé selon la revendication 17,
**caractérisé en ce que**
le moyen d'affichage comprend une zone d'affichage à touche sensitive en tant que moyen d'entrée et une touche sur la zone d'affichage est interprétée en tant qu'entrée.

19. Procédé selon l'une quelconque des revendications 1 à 18,
**caractérisé en ce qu'**
un changement de position qui s'est produit pendant le changement entre les modes d'opération est pris en considération lors de la commande du moyen d'affichage.

20. Procédé selon l'une quelconque des revendications 1 à 19,
**caractérisé en ce que**
le changement entre le premier et le second mode d'opération est réalisé d'une manière commandée en fonction du temps.
